Europäisches Patentamt

European Patent Office

Office européen des brevets

(19)

(11) Veröffentlichungsnummer: **0 188 694**
**B1**

(12) **EUROPÄISCHE PATENTSCHRIFT**

(45) Veröffentlichungstag der Patentschrift: **26.09.90**

(51) Int. Cl.⁵: **G 08 G 1/054**

(21) Anmeldenummer: **85114741.3**

(22) Anmeldetag: **19.11.85**

(54) **Verfahren und Vorrichtung zur photographischen Registrierung von Fahrzeugen.**

(30) Priorität: **30.11.84 CH 5721/84**

(43) Veröffentlichungstag der Anmeldung:
**30.07.86 Patentblatt 86/31**

(45) Bekanntmachung des Hinweises auf die
Patenterteilung:
**26.09.90 Patentblatt 90/39**

(84) Benannte Vertragsstaaten:
**AT BE DE FR GB IT NL SE**

(56) Entgegenhaltungen:
**DE-A-3 023 450**
**DE-B-1 805 903**
**DE-C-2 802 448**
**FR-A-2 250 170**
**US-A-3 206 748**

(73) Patentinhaber: **ZELLWEGER USTER AG**
**Wilstrasse 11**
**CH-8610 Uster (CH)**

(72) Erfinder: **Goede, Simon**
**Höhenstrasse 27**
**CH-8620 Wetzikon (CH)**

(74) Vertreter: **Dipl.-Phys.Dr. Manitz Dipl.-Ing., Dipl.-**
**W.-Ing. Finsterwald Dipl.-Ing. Grämkow Dipl.-**
**Chem.Dr. Heyn Dipl.-Phys. Rotermund**
**Morgan, B.Sc.(Phys.) Robert-Koch-Strasse 1**
**D-8000 München 22 (DE)**

EP 0 188 694 B1

## Beschreibung

Die Erfindung betrifft ein Verfahren zur bildlichen, insbesondere photographischen Registrierung von entgegenkommenen Fahrzeugen mittels einer mit einer Bildaufnahmevorrichtung ausgerüsteten Doppler-Radar-Geschwindigkeitsmesseinrichtung, mit welcher die Fahrzeuge von vorne gemessen und bildlich registriert werden, wobei während eines Messabschnittes nach der Einfahrt eines Fahrzeuges in die Messkeule ein entsprechender Geschwindigkeitsmesswert bestimmt, und dann, wenn dieser einen bestimmten Grenzwert überschreitet, die Bildaufnahmevorrichtung ausgelöst wird, und wobei der Geschwindigkeitsmesswert in die Aufnahme eingeblendet wird.

Aus der DE-PS 1 805 903 ist ein Verfahren zur Kameraauslösung bei einer Doppler-Radar-Geschwindigkeitsmesseinrichtung bekannt, bei welchem die Fahrzeuge von hinten gemessen und photographiert werden, wobei die Auslösung der Kamera unterdrückt wird, wenn der gemessene Geschwindigkeitswert nicht zweifelsfrei einem bestimmten Fahrzeug zugeordnet werden kann.

Da beim Vermessen und Photographieren des abfliessenden Verkehrs nur das fehlbare Fahrzeug, nicht aber auch dessen Lenker idendifiziert wird, ist man in jüngster Zeit dazu übergegangen, entweder zusätzlich zur Aufnahme von hinten oder auch ohne diese eine sogenannte Frontphotographie zu machen, was eine eindeutige Identifizierung auch des Fahrzeuglenkers ermöglicht. Eine dazu geeignete Vorrichtung ist beispielsweise aus der DE-PS 28 02 448 bekannt.

Man stellt also am Strassenrand entweder eine Geschwindigkeitsmesseinrichtung der in der DE-PS 1 805 903 beschriebenen Art und einer mit dieser gekoppelte Frontphotographievorrichtung nach der DE-PS 28 02 448 auf und vermisst die Fahrzeuge von hinten und photographiert sie von hinten und von vorne, oder man verwendet eine einzige Geschwindigkeitsmesseinrichtung und vermisst und photographiert die Fahrzeuge nur von vorne.

Im ersten Fall verteuert sich die Anlage durch die Verwendung von zwei Kameras und sie wird auch unhandlich und dürfte eher nur für stationären, nicht aber für mobilen Einsatz geeignet sein.

Im zweiten Fall ergibt sich aus der Forderung, dass das Fahrzeug möglichst schnell nach seiner Einfahrt in den Messbereich des Radargeräts photographiert werden muss, weil es sonst das Kamerablickfeld verlässt, die Bedingung, dass die Bestimmung des Geschwindigkeitswertes innerhalb einer relativ kurzen Messstrecke stattfindet. Da die Messung unmittelbar nach der Bestimmung dieses Messwertes abgeschlossen und die Kamera ausgelöst Wird, wobei sich jedoch das Fahrzeug erst am Anfang des Messbereichs des Radargerätes befindet, bleibt somit der grösste Teil des während der Durchfahrt des Fahrzeugs durch die Messkeule erzeugten Dopplersignals unausgewertet, wodurch die Messzuverlässigkeit verringert wird.

So können beispielsweise direkt während oder nach der Messung innerhalb des Messbereichs des Radargerätes stattfindende Ueberholvorgänge nicht erfasst werden, weil auf der entsprechenden Aufnahme in einem relativ engen Bereich mehrere Fahrzeuge abgebildet wären und die sichere Zuordnung des eingeblendeten Messwerts zu einem bestimmten der abgebildeten Fahrzeuge nicht möglich ist. Um Fehlzuordnungen zu vermeiden, muss daher auf die Auswertung derartiger Aufnahmen mit mehreren Fahrzeugen mit relativ kleinen Abständen verzichtet werden, wobei jedoch im heutigen dichten Verkehr der Anteil solcher Aufnahmen, die nicht ausgewertet werden können, relativ gross ist.

Die Erfindung hat nun die Aufgabe, für die heute bevorzugte Messanordnung der Messung und photographie von vorne, also des entgegenkommenden Verkehrs, die Messzuverlässigkeit zu erhöhen und die nicht auswertbaren Aufnahmen zu eliminieren oder deren Anzahl zumindest drastisch zu reduzieren.

Die gestellte Aufgabe wird erfindungsgemäss dadurch gelöst, dass nach der Auslösung der Bildaufnahmevorrichtung das bei der Durchfahrt des Fahrzeugs durch einen im folgenden als Verifikationsstrecke bezeichneten Streckenabschnitt der Messkeule erzeugte Dopplersignal weiter ausgewertet und das Ergebnis dieser Auswertung zur Ueberprüfung des Geschwindigkeitsmesswertes verwendet wird.

Das erfindungsgemässe Verfahren ermöglicht also trotz der erforderlichen Messung und Photographie eines Fahrzeugs am Anfang des Messbereichs des Radargeräts die Auswertung des ganzen während der Durchfahrt durch die Messkeule erzeugten Dopplersignals, indem der ursprüngliche Geschwindigkeitsmesswert über die Verifikationsstrecke überprüft wird. Dabei können insbesondere auch Ueberholvorgänge im Bereich der Messkeule erfasst werden.

Die Erfindung betrifft weiter eine Vorrichtung zur Durchführung des genannten Verfahrens, mit einer Doppler-Radar-Geschwindigkeitsmesseinrichtung, mit einem Rechner zur Auswertung der Dopplersignale und mit einer eine Dateneinblende-Einheit aufweisenden Kamera, welche vom Rechner mit einem Kamera-Auslöse-, einem Film-Transport- und einem Daten-Einblendesignal angesteuert ist.

Die erfindungsgemässe Vorrichtung ist dadurch gekennzeichnet, dass der Rechner so ausgestaltet ist, daß er nach Abgabe des Kamera-Auslösesignals den Geschwindigkeitsmesswert des angemessenen Fahrzeugs über die Verifikationsstrecke überprüft und anhand des Ergebnisses dieser Ueberprüfung entweder die Einblendung des Geschwindigkeitsmesswertes oder die Annullation der Messung und anschliessend daran den Weitertransport des Films auslöst.

Dadurch, dass der Film nicht nach der Auslösung der Kamera sofort weitertransportiert wird, wird die Möglichkeit der Ueberprüfung des Geschwindigkeitsmesswertes während der Verifikationsstrecke geschaffen, was dann zu einer Bestätigung des Geschwindigkeitsmesswertes

2

oder zu dessen Annullation führt. Durch diese Massnahmen wird bei der Ueberwachung des entgegenkommenden Verkehrs trotz Messung und Photographie von vorne eine Messzuverlässigkeit erreicht wie bei der Messung und Photographie von hinten, gegenüber der letzteren ergibt sich aber der zusätzliche Vorteil der sicheren und eindeutigen Identifizierung des Fahrzeuglenkers.

Nachstehend wird die Erfindung anhand eines Ausführungsbeispiels und der Zeichnungen näher erläutert; es zeigen:

Fig. 1 Eine schematische Darstellung der Geometrie der Aufstellung einer erfindungsgemässen Einrichtung an einer Strasse mit zwei Spuren pro Fahrtrichtung,

Fig. 2, 3 je ein Diagramm einer konkreten Verkehrssituation mit zwei Fahrzeugen in der Messkeule in der oberen Hälfte und mit dem entsprechenden Geschwindigkeitsdiagramm in der unteren Hälfte,

Fig. 4 ein Blockschaltbild der erfindungsgemässen Einrichtung, und

Fig. 5a, 5b ein Flussdiagramm des Programms des Mikrorechners der Einrichtung von Fig. 4.

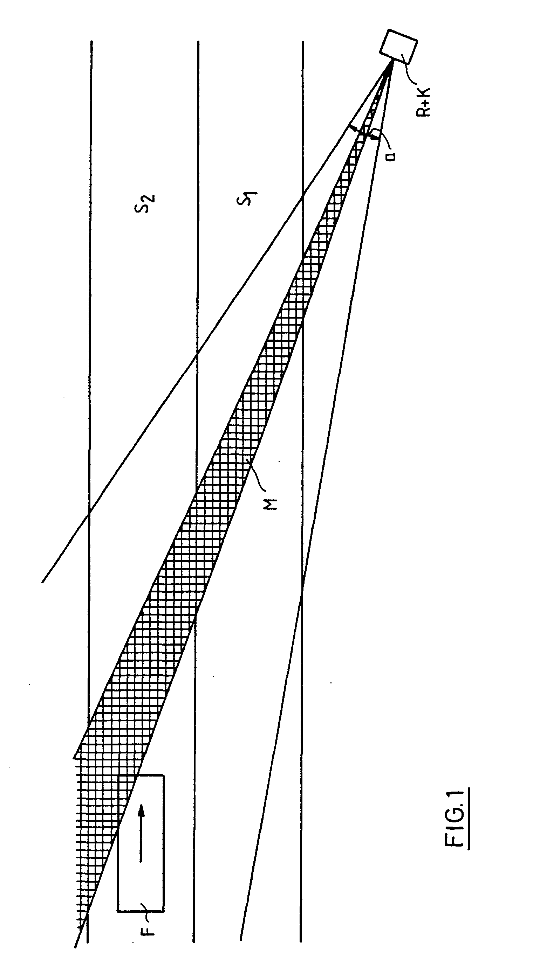

Fig. 1 zeigt zwei Spuren $S_1$ und $S_2$ einer Strasse, beispielsweise der einen Hälfte einer Autobahn, mit einem in Richtung des eingezeichneten Pfeiles fahrenden Fahrzeug F auf der Ueberholspur $S_2$. Seitlich der Normalspur $S_1$ ist ein Radargerät mit Kamera R+K aufgestellt, welches den entgegenkommenden Verkehr überwacht. Das Radargerät sendet die schraffiert eingezeichnete Messkeule M aus, die Kamera hat den Oeffnungswinkel a. Radargerät und Kamera R+K können in ein Fahrzeug eingebaut oder auf einem Stativ angeordnet sein. Der Messwinkel zur Fahrtrichtung beträgt etwa 22°.

Sobald das Fahrzeug F so wie in der Figur dargestellt mit seiner Front in die Messkeule M einfährt, reflektiert es die Radarstrahlung und es wird im Radargerät in bekannter Weise durch Ueberlagerung eines Teils der Sendeenergie mit der vom Fahrzeug reflektierten Empfangsenergie eine elektrische Schwingung, das Dopplersignal erzeugt, dessen Frequenz, die Dopplerfrequenz der Relativgeschwindigkeit zwischen Fahrzeug und Radargerät proportional ist. Diese Vorgänge sind in der DE-PS 1 805 903, auf welche hiermit Bezug genommen wird, ausführlich beschrieben.

Sobald sich die Dopplerfrequenz nach der Einfahrt des Fahrzeuges F in die Messkeule M während eines bestimmten Messabschnittes stabilisiert hat, wird ähnlich wie bei dem in der DE-PS 1 805 903 beschriebenen Verfahren, aus dem Durchschnitt der während dieses Messabschnitts stabilen Dopplerfrequenz ein Geschwindigkeitsmesswert bestimmt und gespeichert. Sobald dieser einen gespeicherten Geschwindigkeitsgrenzwert für die am Messort zulässige Höchstgeschwindigkeit überschreitet, wird die Kamera ausgelöst und das Fahrzeug von vorne photographiert; der Film wird jedoch nicht weitertransportiert.

Anschliessend wird die Dopplerfrequenz auf ihr zeitliches Verhalten im Vergleich zum zuvor gespeicherten Geschwindigkeitsmesswert hin überprüft. Dazu wird zunächst ein auf diesen gespeicherten Geschwindigkeitsmesswert bezogener Toleranzbereich von beispielsweise ± 3% bestimmt und es werden aus dem Geschwindigkeitsmesswert Zeitwerte errechnet, die gewissen Streckenlängen entsprechen, welche das Fahrzeug F zurücklegt. Es wird ein Streckenabschnitt, die sogenannte Verifikationsstrecke von beispielsweise 3 m Länge definiert, innerhalb welchem die Dopplerfrequenz keine signifikanten Abweichungen vom gespeicherten Geschwindigkeitsmesswert aufweisen darf. Als signifikante Abweichung wird ein ununterbrochenes Verlassen des Toleranzbereichs während einer eine gewisse Grenzlänge von beispielsweise 1 m überschreitenden Strecke definiert. Darunterliegende Ueber- oder Unterschreitungen des Toleranzbereichs, wie sie bei jeder Messung auch ohne die Präsenz weiterer Fahrzeuge in der Messkeule auftreten können, werden hingegen toleriert und führen daher nicht zu einer Annullation der Messung.

Wenn während der Verifikationsstrecke keine derartigen signifikanten Abweichungen der Dopplerfrequenz vom gespeicherten Geschwindigkeitsmesswert auftreten, dann wird daraus abgeleitet, dass sich keine weiteren Fahrzeuge in unmittelbarer Nähe des angemessenen Fahrzeugs F aufhalten, so dass die Zuordnung des Geschwindigkeitsmesswertes zum zuvor photographierten Fahrzeug F gesichert ist. Erst jetzt wird der Geschwindigkeitsmesswert in die schon gemachte Aufnahme eingeblendet. Anschliessend wird der Film weitertransportiert und die Kamera ist für eine neue Aufnahme bereit.

Wenn während der Verifikationsstrecke mindestens eine signifikante Abweichung der Dopplerfrequenz vom gespeicherten Geschwindigkeitsmesswert auftritt, dann besteht die Wahrscheinlichkeit der gleichzeitigen Anwesenheit mehrerer Fahrzeuge in der Messkeule, wodurch eine sichere Zuordnung des Geschwindigkeitsmesswertes zu einem bestimmten dieser Fahrzeuge unmöglich ist. Daher wird nach Ablauf der Verifikationsstrecke die Messung annulliert, indem in die schon gemachte Aufnahme anstatt des Geschwindigkeitsmesswertes eine spezielle Annullationsanzeige, beispielsweise zwei Striche --, eingeblendet wird. Anschliessend wird der Film weitertransportiert und die Kamera ist für eine neue Aufnahme bereit.

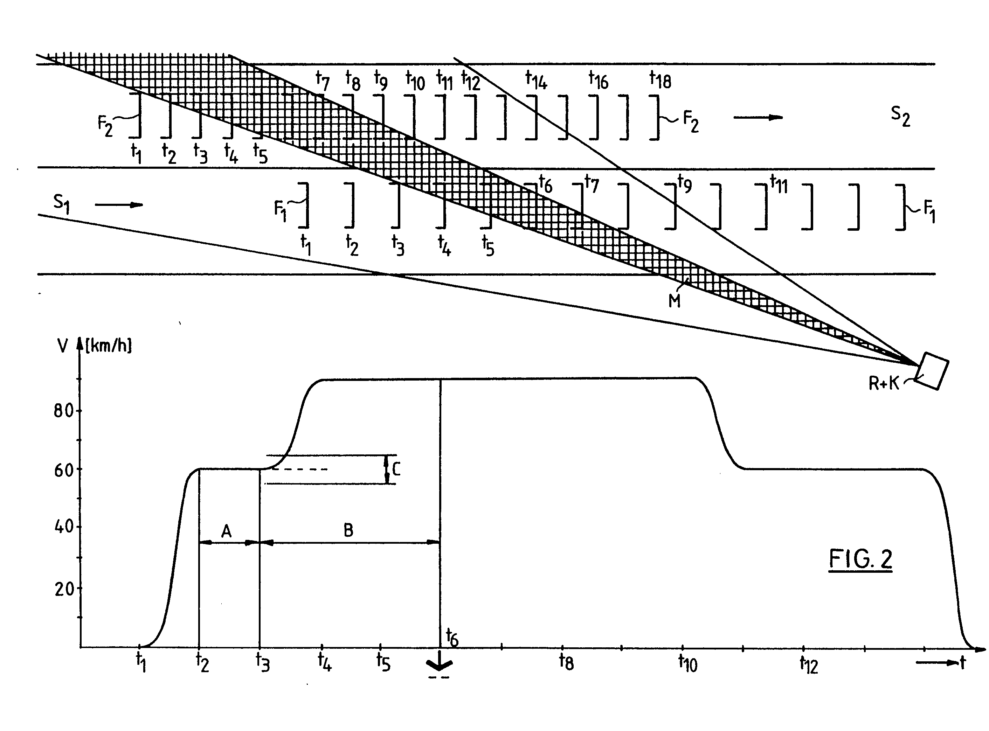

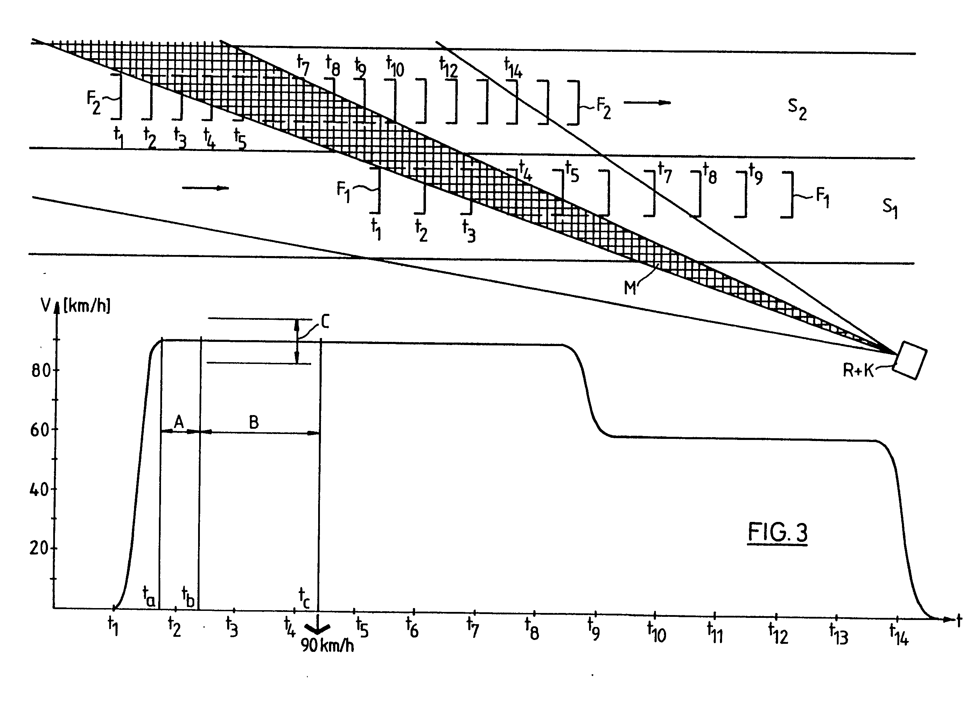

Diese eben beschriebenen Vorgänge sollen nun anhand von zwei in den Figuren 2 und 3 dargestellten Beispielen erläutert werden. Dabei sind die Fahrzeuge in der Messkeule M jeweils nur durch ihre Front symbolisiert, deren jeweilige Position für verschiedene Zeitpunkte $t_1$ bis $t_{18}$ eingezeichnet ist. Da die Fahrzeuge mit unterschiedlicher Geschwindigkeit fahren, sind in den beiden Spuren $S_1$ und $S_2$ die den gefahrenen Strecken zwischen den einzelnen Zeitpunkten entsprechenden Abstände verschieden gross, oder mit anderen Worten, dasjenige Fahrzeug, bei dem die Abstände zwischen den einzelnen Zeitpunkten grösser sind, fährt schneller. In den Fig. 2 und 3 ist jeweils in der oberen Hälfte das Diagramm der jeweiligen Verkehrssituation und in der unteren Hälfte das entsprechende Geschwindigkeitsdiagramm dargestellt.

Fig. 2 zeigt in der Spur $S_2$ ein langsameres Fahrzeug $F_2$, welches von einem schnelleren Fahrzeug $F_1$ auf der Spur $S_1$ rechts überholt wird. Das Fahrzeug $F_2$ fährt zum Zeitpunkt $t_1$ zuerst in die Messkeule M ein und löst die Messung aus, das Fahrzeug $F_1$ gelangt erst zum Zeitpunkt $t_3$ in die Messkeule. Während des Zeitintervalls $t_2$ bis $t_3$, das der Länge der Messstrecke A entsprechen soll, bleibt die Dopplerfrequenz stabil, sodass zum Zeitpunkt $t_3$ folgende Vorgänge ablaufen:

- Bestimmung des Geschwindigkeitsmesswerts und dessen Speicherung (es sei angenommen, dass die zulässige Höchstgeschwindigkeit unter 60 km/h liege),
- Festlegung des Toleranzbereichs C,
- Festlegung der Länge einer signifikanten Abweichung,
- Festlegung der Länge der Verifikationsstrecke B,
- Auslösung der Kamera.

Ebenfalls zum Zeitpunkt $t_3$ fährt das Fahrzeug $F_1$ - mit höherer Geschwindigkeit als das Fahrzeug $F_2$ - in die Messkeule M ein. Daher verlässt die Dopplerfrequenz schon bald darauf den Toleranzbereich C, und zwar nicht nur vorübergehend, sondern über die gesamte restliche Länge der Verifikationsstrecke 8. Es wird deshalb eine signifikante Abweichung der Dopplerfrequenz vom gespeicherten Geschwindigkeitsmesswert innerhalb der Verifikationsstrecke 8 festgestellt. Daher wird nach Ende der Verifikationsstrecke zum Zeitpunkt $t_6$ in die bereits gemachte Aufnahme ein Annullationszeichen -- eingeblendet und anschliessend wird der Film weitertransportiert. Auf der Aufnahme wird man die beiden Fahrzeuge $F_1$ und $F_2$ bemerken können, deren gegenseitiger Abstand so gering ist, dass eine Messwertzuordnung nicht möglich ist.

Bei dem in Fig. 3 dargestellten Beispiele fahren zwei Fahrzeuge $F_1$ und $F_2$ zum gleichen Zeitpunkt $t_1$ in die Messkeule M ein und zwar das Fahrzeug $F_1$ mit einer Geschwindigkeit von etwa 90 km/h und das Fahrzeug $F_2$ mit einer solchen von etwa 60 km/h. Das Fahrzeug $F_1$ deckt das Fahrzeug $F_2$ vollständig ab, so dass die Dopplerfrequenz sofort zum Wert für das Fahrzeug $F_1$ ansteigt und auf diesem Wert verbleibt, bis das Fahrzeug $F_1$ mit seinem Heck kurz nach dem Zeitpunkt $t_8$ aus der Messkeule M ausfährt. Anschliessend nimmt zwar die Dopplerfrequenz einen Wert entsprechend der Geschwindigkeit des langsameren Fahrzeugs $F_2$ an, was jedoch die erfolgreiche Messung und Registrierung des Fahrzeugs $F_1$ auf der Spur $S_1$ nicht verhindert.

Die Dopplerfrequenz erreicht zum Zeitpunkt $t_a$ einen Wert, von dem sie bis zum Zeitpunkt $t_b$, an dem die Messstrecke A beendet ist, nicht massgeblich abweicht, so dass während der Messstrecke A aufgrund des Durchschnittwertes ein zuverlässiger Geschwindigkeitsmesswert gebildet werden kann. Mit diesem Messwert werden nun ein Toleranzbereich C, die Länge einer signifikanten Abweichung und die Länge der Verifikationsstrecke B bestimmt und es wird ausserdem zum Zeitpunkt $t_b$ nach der Bestimmung des Geschwindigkeitsmesswertes die Kamera ausgelöst der Film jedoch noch nicht weitertransportiert. Da der Geschwindigkeitsmesswert grösser ist als beim Beispiel von Fig. 2, ist auch der Toleranzbereich C grösser und die Zeit, in der die Mess- und die Verifikationsstrecke A bzw. B durchfahren werden, ist entsprechend kürzer.

Da das langsamere Fahrzeug $F_2$ auch über die Verifikationsstrecke 8 vollkommen abgedeckt bleibt, treten während der entsprechenden Zeitspanne keine signifikanten Abweichungen der Dopplerfrequenz vom gespeicherten Geschwindigkeitswert auf. Daher wird am Ende der Verifikationsstrecke, zum Zeitpunkt $t_c$, der Geschwindigkeitsmesswert 90 km/h in die schon gemachte Aufnahme eingeblendet und anschliessend der Film weitertransportiert.

Die Aufnahme kann auch einwandfrei ausgewertet werden, obwohl darauf zwei Fahrzeuge $F_1$ und $F_2$ zu erkennen sind. Denn die Tatsache, dass ein Geschwindigkeitsmesswert und keine Annullationsanzeige eingeblendet ist, beweist, dass das hintere Fahrzeug $F_2$ bei der Messung nicht massgeblich in Erscheinung getreten ist. Denn wenn das Fahrzeug $F_2$ schneller gefahren wäre, dann hätte es während der Verifikationsstrecke die Dopplerfrequenz beeinflusst und es wären signifikante Abweichungen aufgetreten, so dass eine Annullationsanzeige eingeblendet worden wäre.

Die beiden in den Fig. 2 und 3 dargestellten Verkehrssituationen sind lediglich Beispiele zur Erläuterung der Funktions- und Wirkungsweise des erfindungsgemässen Verfahrens. Es sind selbstverständlich viele weitere Verkehrssituationen denkbar, in denen das erfindungsgemässe Verfahren ebenfalls besonders nutzbringend angewendet werden kann. Die in der Beschreibung verwendeten Begriffe Kamera und Film sind nicht so zu verstehen, dass das beschriebene Verfahren auf heute übliche photographische Filme und Kameras eingeschränkt wäre, sie bezeichnen vielmehr jede denkbare Aufzeichnungs- und Registriereinrichtung und jedes dafür geeignete Medium. So könnte man beispielsweise auch elektronische Videokameras und Magnetbänder oder Disketten verwenden.

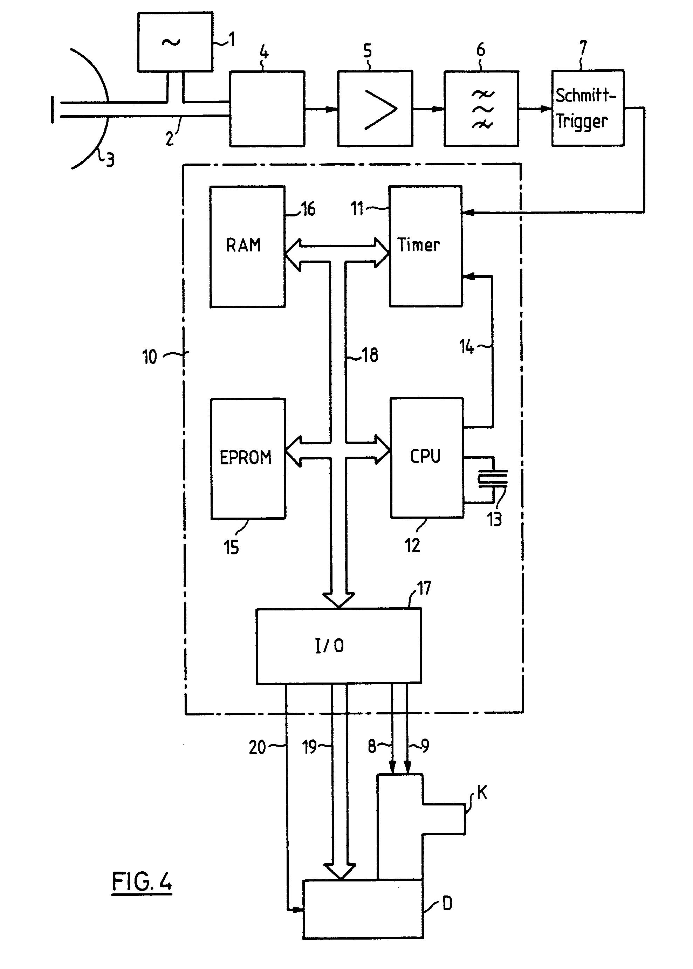

In Fig. 4 ist ein Blockschaltbild einer Vorrichtung zur Durchführung des erfindungsgemässen Verfahrens dargestellt. Ein Mikrowellenoszillator 1 erzeugt ein Mikrowellensignal, welches über einen Hohlleiter 2 einer Antenne 3 zugeführt und von dieser gebündelt abgestrahlt wird. Sobald ein Fahrzeug durch den Strahlungsbereich der Antenne 3 fährt, werden von diesen Strahlungsanteile zur Antenne 3 reflektiert. Diese reflektierten Strahlungsanteile sind gegenüber den ursprünglich von der Antenne 3 abgestrahlten um einen Betrag verschoben, welcher proportional zur Geschwindigkeit des Fahrzeuges ist. Diese Erscheinung bezeichnet man als Dopplereffekt und die Frequenzverschiebung als Dopplerfrequenz.

Die von der Antenne 3 empfangenen reflektierten Strahlungsanteile werden über den Hohlleiter 2 einem Mischer 4 zugeführt, zu welchem ausserdem auch ein kleiner Teil des vom Mikrowellenoszillator erzeugten ursprünglichen Mikrowellensignals gelangt. Die beiden erwähnten Signale werden im Mischer 4 gemischt und das sich daraus ergebende Mischprodukt, eine niederfrequente Wechselspannung mit der Dopplerfrequenz, wird an den Eingang eines Verstärkers 5 gelegt. Dessen Ausgangssignal wird dem Eingang eines Filters 6 zugeführt, welches nur für den für die weitere Auswertung interessierenden Teil des Spektrums, das ist die zum Geschwindigkeitsmessbereich des Radargeräts gehörende Dopplerspektralkomponente, durchlässig ist. Dadurch werden die Anteile der Rauschspannung ausserhalb des Durchlassbereichs des Filters 6 eliminiert, so dass das Signal-Rausch-Verhältnis verbessert wird. Das am Ausgang des Filters 6 erscheinende Signal wird anschliessend von einem Schmitt-Trigger 7 digitalisiert.

Das am Ausgang des Schmitt-Triggers 7 abnehmbare Digitalsignal enthält sämtliche nutzbare Informationen über die Geschwindigkeit der sich im Radarstrahl bewegenden Objekte. Es wird an den Eingang eines zu einem Mikrorechner 10 gehörenden Timers 11 (z.B. INTEL 8253) geführt, in welchem die Zeitintervalle zwischen den logischen Wechseln im digitalisierten Dopplersignal sequentiell gemessen und dem Mikrorechner 11 zur Auswertung angeboten werden. Der Mikrorechner enthält ausser dem Timer 11 noch eine Zentraleinheit (CPU) 12 (z.B. INTEL 8085) mit einem Quarz 13, welcher an den Timer 11 über eine Leitung 14 ein Taktsignal abgibt, einen löschbaren, programmierbaren Festwertspeicher (EPROM) 15 (z.B. INTEL 2764), einen Datenspeicher mit beliebigem Zugriff (RAM) 16 (z.B. INTEL 8185) und eine Ein/Ausgabestufe (I/O) 17 (z.B. INTEL 8255), welche alle durch eine Sammelschiene 18 für die Uebergabe von Daten, Adressen und Steuersignalen verbunden sind.

Ueber die Ein/Ausgabestufe 17 wird eine Registrierkamera K mit einer Dateneinblende-Einrichtung D angesteuert. Die Kamera K ist über Leitungen 8 und 9 für das Kamera-Auslöse- bzw. das Filmtransportsignal und die Dateneinblende-Einrichtung D ist mittels einer Sammelschiene 19 für die einzublendenden Daten und einer Leitung 20 für das Daten-Einblende-Signal mit der Ein/Ausgabestufe 17 verbunden. Der Datenspeicher 16 dient zur vorübergehenden Speicherung von variablen Daten und von Zwischenresultaten und der programmierbare Festwertspeicher 15 enthält in binärem Code das Programm des Mikrorechners 10.

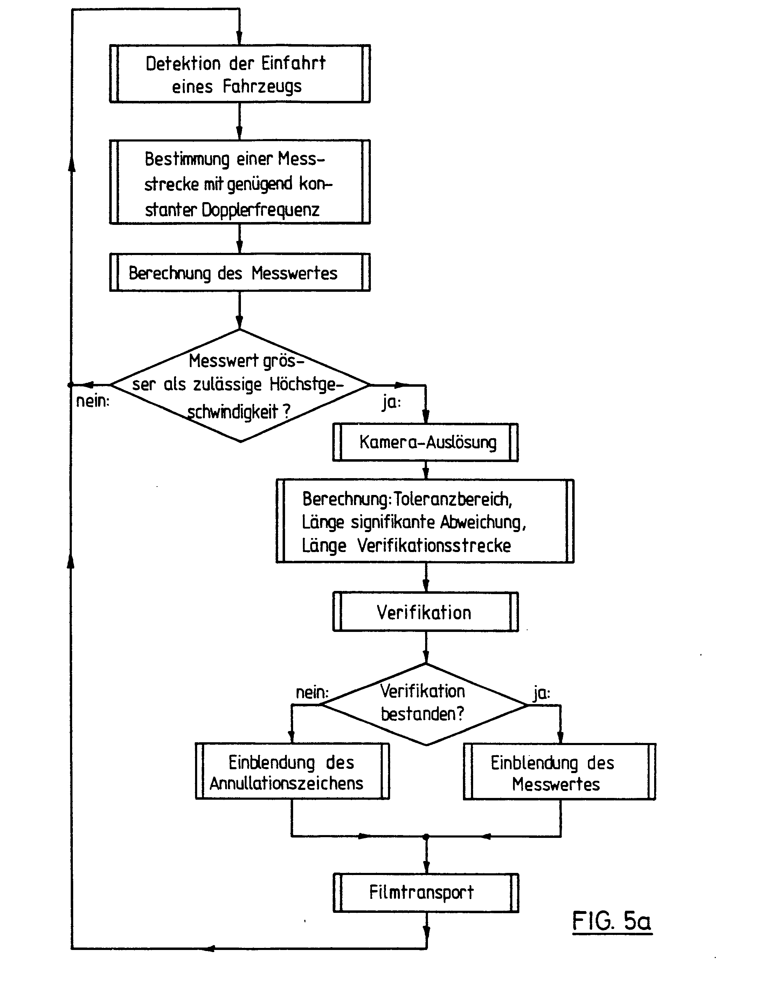

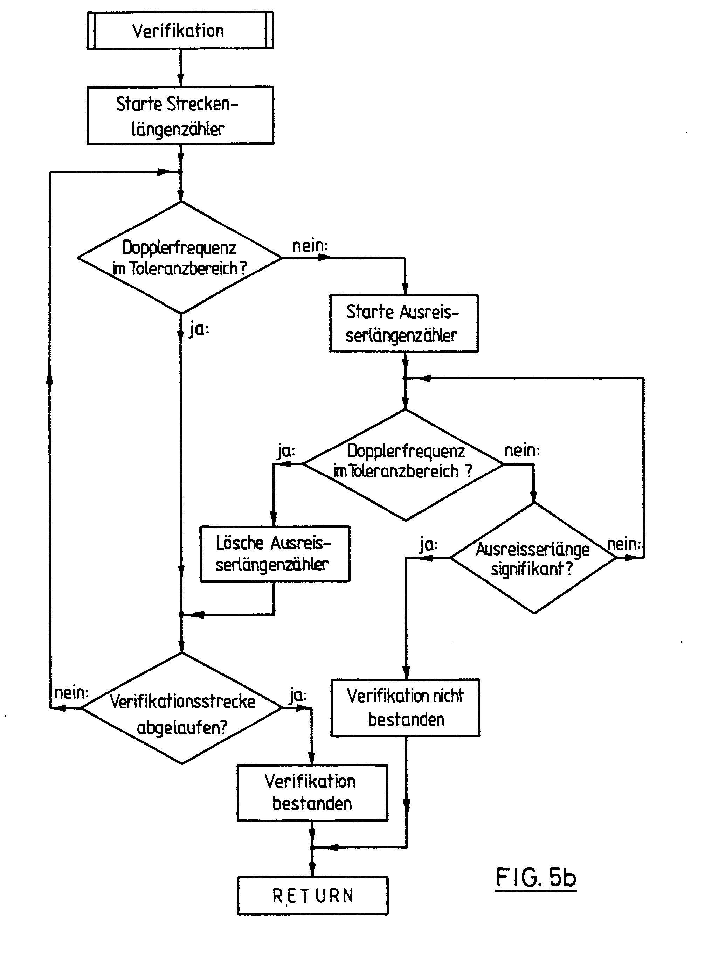

Dieses Programm wird nun anhand des in den Figuren 5a und 5b dargestellten Flussdiagrammes beschrieben:

Ein Messvorgang wird gemäss Fig. 5a mit der Detektion der Einfahrt eines Fahrzeuges F in die Messkeule M (Fig. 1) eingeleitet. Diese Einfahrt kann festgestellt werden durch das Eintreffen einer Reihe von Pegelwechseln im Digitalsignal (Eingang Timer 11, Fig. 4) mit einer minimalen Frequenz nach einer Periode ohne Pegelwechsel. Nach der Detektion der Einfahrt wird die Dopplerfrequenz auf Konstanz überprüft und nach Ablauf einer gewissen Strecke mit ausreichend konstanter Dopplerfrequenz wird aufgrund des Durchschnittswerts der Dopplerfrequenz auf dieser Strecke der Geschwindigkeitsmesswerte berechnet.

Liegt dieser unterhalb der zulässigen Höchstgeschwindigkeit, dann wird keine Aufnahme ausgelöst und bis zur Detektion der Einfahrt des nächsten Fahrzeugs gewartet. Uebersteigt der Messwert die zulässige Höchstgeschwindigkeit, dann wird sofort die Kamera ausgelöst und es werden anschliessend die für die Durchführung der Verifikation benötigten Werte berechnet, und zwar der Toleranzbereich, die Länge einer signifikanten Abweichung und die Länge der Verifikationsstrecke.

Die Verifikation ist in Fig. 5b gesondert dargestellt: Zu Beginn der Verifikation wird ein im Timer 11 (Fig. 4) enthaltener Zähler welcher die abgelaufene Länge der Verifikationsstrecke messen soll, gestartet. Anschliessend wird überprüft, ob die zuletzt gemessene Dopplerperiode innerhalb des festgelegten Toleranzbereichs liegt. Ist dies der Fall, dann wird hierauf der Streckenlängenzähler abgefragt, ob die Verifikationsstrecke schon abgelaufen ist. Ist dies nicht der Fall, dann wird die nächste Dopplerperiode daraufhin überprüft, ob sie innerhalb des Toleranzbereichs liegt. Liegt auch diese innerhalb des Toleranzbereichs, so wird wiederum der Streckenlängenzähler abgefragt, und so weiter. Bleibt die Dopplerfrequenz über die gesamte Verifikationsstrecke im Toleranzbereich, dann wird am Ende dieser Strecke die Verifikation erfolgreich abgeschlossen und es findet ein Rücksprung ins Hauptprogramm (Fig. 5a) statt.

Sobald jedoch eine Dopplerperiode mit einer Länge ausserhalb des Toleranzbereichs gemessen wird, wird das Programm zu einem Seitenast verzweigt. Hier wird zuerst ein im Timer 11 (Fig. 4) enthaltener Ausreisserlängenzähler gestartet, der die Länge des soeben detektierten "Ausreissers", d.h. die Zeitspanne, während welcher die Dopplerfrequenz ausserhalb des Toleranzbereichs liegt, messen soll. Anschliessend wird die Länge der nächsten Dopplerperiode gemessen. Liegt auch diese ausserhalb des Toleranzbereichs, dann wird der Ausreisserlängenzähler abgefragt. Hat der aktuelle Ausreisser noch nicht die Länge einer signifikanten Abweichung erreicht, dann wird die Länge der nächsten Dopplerperiode gemessen.

Dieser Prozess wiederholt sich so lange, bis entweder eine Dopplerperiode mit einer Länge innerhalb des Toleranzbereichs gemessen wird, oder der Ausreisserlängenzähler den Stand für eine signifikante Abweichung erreicht. Im ersten Fall (Dopplerfrequenz wieder im Toleranzbereich) wird der Ausreisserlängenzähler auf Null gesetzt und wieder die erste Programmschleife angesprungen, im zweiten Fall (Ausreisserlänge wird signifikant) wird die Verifikation erfolglos abgeschlossen und ins Hauptprogramm (Fig. 5a) zurückgesprungen.

Im Hauptprogramm (Fig. 5a) wird im Fall einer bestandenen Verifikation der Geschwindigkeitsmesswert in die Dateneinblende-Einrichtung D (Fig. 4) übertragen und das Einblendesignal ausgegeben. Im Fall einer nicht bestandenen Verifikation wird das Annullationszeichen -- zur Dateneinblende-Einrichtung übertragen und ebenfalls das Einblendesignal ausgegeben. Schliesslich wird an die Kamera K (Fig. 4) das Filmtransportsignal abgegeben und anschliessend die Detektion der Einfahrt des nächsten Fahrzeugs abgewartet.

**Patentansprüche**

1. Verfahren zur bildlichen, insbesondere photographischen Registrierung von entgegenkommenden Fahrzeugen mittels einer mit einer Bildaufnahmevorrichtung ausgerüsteten Doppler-Radar-Geschwindigkeitsmesseinrichtung, mit welcher die Fahrzeuge von vorne gemessen und bildlich registriert werden, wobei während eines Messabschnitts nach der Einfahrt eines Fahrzeugs in die Messkeule ein entsprechender Geschwindigkeitsmesswert bestimmt, und dann, wenn dieser einen bestimmten Grenzwert überschreitet, die Bildaufnahmevorrichtung ausgelöst wird, und wobei der Geschwindigkeitsmesswert in die Aufnahme eingeblendet wird, dadurch gekennzeichnet, dass nach Auslösung der Bildaufnahmevorrichtung (K) das bei der der Durchfahrt des Fahrzeugs (F) durch einen im folgenden als Verifikationsstrecke (B) bezeichneten Streckenabschnitt der Messkeule (M) erzeugte Dopplersignal weiter ausgewertet und das Ergebnis dieser Auswertung zur Ueberprüfung des Geschwindigkeitsmesswertes verwendet wird.

2. Verfahren nach Anspruch 1, dadurch gekennzeichnet, dass die Einblendung des Geschwindigkeitsmesswertes in die Aufnahme erst nach der weiteren Auswertung des Dopplersignales erfolgt und zwar nur dann, wenn das Ergebnis der Ueberprüfung die Richtigkeit des Geschwindigkeitsmesswertes bestätigt hat.

3. Verfahren nach Anspruch 1, dadurch gekennzeichnet, dass dann, wenn die weitere Auswertung des Dopplersignals die Richtigkeit des Geschwindigkeitsmesswertes nicht bestätigt hat, die Aufnahme annulliert wird, wobei vorzugsweise anstelle des Geschwindigkeitsmesswertes eine Annullationsanzeige (--) in die Aufnahme eingeblendet wird.

4. Verfahren nach den Ansprüchen 2 und 3, dadurch gekennzeichnet, dass das Bildaufnahmemedium, insbesondere der photographische Film, erst nach der Einblendung des Geschwindigkeitsmesswertes oder der Annulationsanzeige (--) weitertransportiert und damit für die nächste Registrierung bereitgestellt wird.

5. Verfahren nach einem der Ansprüche 1 bis 4, dadurch gekennzeichnet, dass die Länge der Verifikationsstrecke (8) mindestens gleich lang gewählt wird wie die Länge des Messabschnitts (A), vorzugsweise ein Mehrfaches dieser Länge beträgt und höchstens bis zur Ausfahrt des Fahrzeugs (F) aus der Messkeule (M) reicht.

6. Verfahren nach Anspruch 5, dadurch gekennzeichnet, dass man für den Messabschnitt eine Länge von etwa 25 cm und für die Verifikationsstrecke (B) eine solche von etwa 3 m festlegt.

7. Verfahren nach Anspruch 3, dadurch gekennzeichnet, dass bei der weiteren Auswertung des Dopplersignals über die Verifikationsstrecke (B) überprüft wird, ob das Dopplersignal während einer eine gegebene Grenzlänge überschreitenden Strecke ununterbrochen von einem bestimmten Toleranzbereich (C) um den Geschwindigkeitsmesswert abweicht, wobei eine derartige Abweichung zur Annullation der Aufnahme führt.

8. Vorrichtung zur Durchführung des Verfahrens nach Anspruch 1, mit einer Doppler-Radar-Geschwindigkeitsmesseinrichtung, mit einem Rechner zur Auswertung der Dopplersignale, und mit einer eine Dateneinblende-Einrichtung aufweisenden Kamera, welche vom Rechner mit einem Kamera-Auslöse-, einem Film-Transport- und einem Daten-Einblendesignal angesteuert ist, dadurch gekennzeichnet, dass der Rechner (10) so ausgestaltet ist, daß er nach Abgabe des Kamera-Auslösesignals den Geschwindigkeitsmesswert des angemessenen Fahrzeuges (F) über die Verifikationsstrecke (B) überprüft und anhand des Ergebnisses dieser Ueberprüfung entweder die Einblendung des Geschwindigkeitsmesswertes oder die Annullation der Messung und anschliessend daran den Weitertransport des Films auslöst.

9. Vorrichtung nach Anspruch 8, dadurch gekennzeichnet, dass der Rechner (10) einen Timer (11) zur sequentiellen Messung der Zeitintervalle zwischen den logischen Wechseln im digitalisierten Dopplersignal, eine Zentraleinheit (12), einen Datenspeicher (16) zur vorübergehenden Speicherung von variablen Daten und/oder Zwischenresultaten, einen programmierbaren Festwertspeicher (15) mit dem Rechnerprogramm, und eine Ein/Ausgabestufe (17) enthält, an welche letztere die Kamera (K) und die Dateneinblende-Einrichtung (D) angeschlossen sind.

**Revendications**

1. Procédé pour l'enregistrement sous forme d'image, notamment photographique, de véhicules s'approchant, au moyen d'un cinémomètre à radar à effet Doppler équipé d'un dispositif de prise de vues, avec lequel les véhicules sont mesurés de devant et enregistrés sous forme d'image, dans lequel, pendant un intervalle de mesure après l'entrée d'un véhicule dans le lobe de mesure, on détermine une valeur mesurée correspondante de la vitesse et ensuite, si cette valeur dépasse une valeur limite déterminée, on déclenche le dispositif de prise de vues et dans lequel on insère la valeur mesurée de la vitesse dans le cliché, caractérisé en ce que, après le déclenchement du dispositif de prise de vues (K), on évalue de nouveau le signal Doppler produit lors du passage du véhicule (F) dans un tronçon du lobe de mesure (M) appelé ci-après "tronçon de vérification" (B), et on utilise le résultat de cette évaluation pour vérifier la valeur mesurée de la vitesse.

2. Procédé selon la revendication 1, caractérisé en ce que l'insertion de la valeur mesurée de la vitesse dans le cliché n'a lieu qu'après la nouvelle évaluation du signal Doppler et seulement si le résultat de la vérification a confirmé la justesse de la valeur mesurée de la vitesse.

3. Procédé selon la revendication 1, caractérisé en ce que, si la nouvelle évaluation du signal Doppler n'a pas confirmé la justesse de la valeur mesurée de la vitesse, on annule le cliché, une indication d'annulation (--) étant, de préférence, insérée dans le cliché à la place de la valeur mesurée de la vitesse.

4. Procédé selon les revendications 2 et 3, caractérisé en ce que le support de prise de vues, notamment la pellicule photographique, n'est avancé qu'après insertion de la valeur mesurée de la vitesse ou de l'indication d'annulation (--) et est ainsi préparé pour l'enregistrement suivant.

5. Procédé selon l'une des revendications 1 à 4, caractérisé en ce que la longueur du tronçon de vérification (B) est choisie au moins égale à la longueur du tronçon de mesure (A), de préférence est un multiple de cette longueur, et s'étend au maximum jusqu'à la sortie du véhicule (F) du lobe de mesure (M).

6. Procédé selon la revendication 5, caractérisé en ce qu'on fixe une longueur d'environ 25 cm pour le tronçon de mesure et une longueur d'environ 3 m pour le tronçon de vérification (B).

7. Procédé selon la revendication 3, caractérisé en ce que lors de la nouvelle évaluation du signal Doppler dans le tronçon de vérification (B), on vérifie si, pendant un intervalle dépassant une longueur limite donnée, le signal Doppler s'écarte en permanence d'une marge de tolérance (C) de part et d'autre de la valeur mesurée de la vitesse, un tel écart conduisant à l'annulation du cliché.

8. Dispositif pour la mise en oeuvre du procédé selon la revendication 1, avec un cinémomètre à radar à effet Doppler, avec un calculateur pour l'évaluation du signal Doppler, et avec un appareil photographique équipé d'un dispositif d'insertion de données qui est commandé par le calculateur avec un signal de déclenchement d'appareil photographique, un signal d'avance de pellicule et un signal d'insertion de données, caractérisé en ce que le calculateur (10) est constitué de telle manière qu'après émission du signal de déclenchement de l'appareil photographique, il vérifie la valeur mesurée de la vitesse du véhicule mesuré (F) dans le tronçon de vérification (B) et, au moyen du résultat de cette vérification, déclenche soit l'insertion de la valeur mesurée de la vitesse, soit l'annulation de la mesure, et ensuite l'avance de la pellicule.

9. Dispositif selon la revendication 8, caractérisé en ce que le calculateur (10) comporte un dispositif de temporisation (11) pour la mesure séquentielle de l'intervalle de temps entre les changements logiques dans le signal Doppler numérisé, une unité centrale (12), une mémoire de données (16) pour le stockage temporaire de données variables et/ou de résultats intermédiaires, une mémoire de constantes programmable (15) avec le programme du calculateur, et un étage d'entrée/sortie (17) auquel l'appareil photographique (K) et le dispositif d'insertion de données (D) sont reliés.

**Claims**

1. A method for the pictorial and in particular photographic registration of oncoming vehicles by means of a Doppler-radar speed measuring device equipped with a picture recording device with which the vehicles are measured from the front and pictorially registered, wherein, during a measurement section after the entry of a vehicle into the measurement lobe, a corresponding measured speed value is determined and the picture recording device is initiated when a specific boundary value is exceeded, and wherein the measured speed value is blended into the recording, characterised in that, after initiating the picture recording device (K), the Doppler signal generated by the passage of the vehicle (F) through a section of a measuring lobe (M) hereinafter termed the verification section (B) is further evaluated and the result of this evaluation is used for the checking of the measured speed value.

2. Method in accordance with claim 1, characterised in that the blending of the measured speed value into the recording first takes place after the further evaluation of the Dopplersignal, and indeed only when the result of the check has confirmed the correctness of the measured speed value.

3. Method in accordance with claim 1, characterised in that when the further evaluation of the Dopplersignal has not confirmed the correctness of the measured speed value the recording is cancelled and a cancellation indication (--) is preferably blended into the recording in place of the measured speed value.

4. Method in accordance with claims 2 and 3, characterised in that the recording medium, in particular the photographic film is first transported further, and thus prepared for the next registration, after the measured speed value or the cancellation indication (--) has been blended in.

5. Method in accordance with one of the claims 1 to 4, characterised in that the length of the verification section (B) is selected to be at least as long as the length of the measurement section (A), preferably amounts to a multiple of this length and extends at most up to the exit of the vehicle (F) from the measurement lobe (M).

6. Method in accordance with claim 5, characterised in that one specifies a length of approximately 25 cm for the measurement section and a length of approximately 3 m for the verification section (B).

7. Method in accordance with claim 3, characterised in that during the further evaluation of the Doppler signal over the verification section (B) a check is made whether the Dopplersignal deviates without interruption from a specific tolerance range (C) around the measured speed value over a distance which exeeds a given boundary length, a deviation of this kind leading to cancellation of the recording.

8. Apparatus for carrying out the method of the claim 1 comprising a Doppler radar speed measuring device with a computer for evaluating the Doppler signals and with a camera having a data blend-in device which is controlled by the computer with a camera triggering signal, a film transport signal and a data blend in signal, characterised in that the computer (10) is so laid out that after transmitting the camera trigger signal it checks the measured speed value of the measured vehicle (F) over the verification section (B) and, in response to the result of this check, either initiates the blending in of the measured speed value or the cancellation of the measurement and, following this, the further transport of the film.

9. Apparatus in accordance with claim 8, characterised in that the computer (10) has a time (11) for the sequential measurement of the time intervals between the logical changes in the digitized Doppler signal, a central unit (12), a data memory (16) for temporarily storing variable data and/or intermediate results, a programmable read only memory (15) with the computer program and an input/output stage (17) to which the camera (K) and the data blend-in device (D) are connected.

FIG.1

EP 0 188 694 B1

S₂

$t_7$ $t_8$ $t_9$ $t_{10}$ $t_{11}$ $t_{12}$ $t_{14}$ $t_{16}$ $t_{18}$

$F_2$ $F_2$

$t_1$ $t_2$ $t_3$ $t_4$ $t_5$

S₁

$F_1$ $t_6$ $t_7$ $t_9$ $t_{11}$ $F_1$

$t_1$ $t_2$ $t_3$ $t_4$ $t_5$

M

R+K

V [km/h]

80

60

40

20

C

A

B

$t_6$

FIG. 2

$t_1$ $t_2$ $t_3$ $t_4$ $t_5$ $t_6$ $t_8$ $t_{10}$ $t_{12}$ t

FIG. 3

EP 0 188 694 B1

EP 0 188 694 B1

FIG. 4

```
┌─────────────────────────────┐
│  Detektion der Einfahrt     │
│  eines Fahrzeugs            │
└─────────────────────────────┘
             │
┌─────────────────────────────┐
│  Bestimmung einer Mess-     │
│  strecke mit genügend kon-  │
│  stanter Dopplerfrequenz    │
└─────────────────────────────┘
             │
┌─────────────────────────────┐
│  Berechnung des Messwertes  │
└─────────────────────────────┘
             │
        ◇ Messwert grös-
     ser als zulässige Höchstge-
          schwindigkeit ?
  nein:                    ja:
             │
┌─────────────────────────────┐
│  Kamera-Auslösung           │
└─────────────────────────────┘
             │
┌─────────────────────────────┐
│  Berechnung: Toleranzbereich,│
│  Länge signifikante Abweichung,│
│  Länge Verifikationsstrecke │
└─────────────────────────────┘
             │
┌─────────────────────────────┐
│  Verifikation               │
└─────────────────────────────┘
             │
   nein:  ◇ Verifikation   ja:
          bestanden?
┌──────────────────┐   ┌──────────────────┐
│ Einblendung des  │   │ Einblendung des  │
│ Annullationszeichens│ │ Messwertes       │
└──────────────────┘   └──────────────────┘
             │
┌─────────────────────────────┐
│  Filmtransport              │
└─────────────────────────────┘
```

FIG. 5a

FIG. 5b